# EUROPÄISCHE PATENTSCHRIFT

(11) **EP 4 116 038 B1**
(45) Veröffentlichungstag und Bekanntmachung des Hinweises auf die Patenterteilung: **18.02.2026**
(21) Anmeldenummer: 22176719.7
(22) Anmeldetag: 01.06.2022
(51) Int. Cl.: B25B 23/142, G01L 5/24, G01L 25/00

(54) **SIMULATIONSEINRICHTUNG FÜR DIE SCHRAUBFALLSIMULATION EINES DREHSCHRAUBERS**
SIMULATION DEVICE FOR THE SCREW-DOWN SIMULATION OF A ROTARY SCREWDRIVER
DISPOSITIF DE SIMULATION POUR LA SIMULATION DE CHUTE DE VIS D'UN TOURNEVIS

(30) Priorität: 07.07.2021 EP 21184325
(43) Veröffentlichungstag der Anmeldung: 11.01.2023
(73) Patentinhaber: Kistler Holding AG, 8408 Winterthur (CH)
(72) Erfinder: Neumann, Gerald, 42499 Hückeswagen (DE); Fischer, Siegfried, 42859 Wermelskirchen (DE)

(56) Entgegenhaltungen:
- EP-A1- 0 849 049
- WO-A1-2016/103147
- US-A- 5 886 246

## Beschreibung

### Technisches Gebiet

Die Erfindung betrifft eine Simulationseinrichtung für die Schraubfallsimulation eines Drehschraubers nach dem Oberbegriff des unabhängigen Anspruches. Die Erfindung betrifft auch ein Verfahren zur Durchführung der Schraubfallsimulation eines Drehschraubers unter Verwendung der Simulationseinrichtung nach dem Oberbegriff des unabhängigen Anspruches. Zudem betrifft die Erfindung ein Verfahren zur Nachrüstung einer bestehenden Simulationseinrichtung zur Bildung der Simulationseinrichtung nach dem Oberbegriff des unabhängigen Anspruches.

### Stand der Technik

Ein Drehschrauber ist gemäss Richtlinie VDI/VDE 2647 vom Februar 2013 ein motorisch betriebenes Schraubwerkzeug. Der Drehschrauber ist aktivierbar und der aktivierte Drehschrauber dreht kontinuierlich um eine Drehachse und übt dabei ein Drehmoment auf ein Verbindungselement aus.

Das Verbindungselement weist ein Gewinde auf und ist eine Schraube, eine Mutter, usw. Das Verbindungselement dient der Verbindung von Bauteilen. Die Verbindung erfolgt durch eine Klemmkraft zwischen den Bauteilen. Die Klemmkraft gewährleistet den Einsatz der Bauteile unter maximalen Betriebskräften.

Das vom aktivierten Drehschrauber ausgeübte Drehmoment dient also der Erzeugung der Klemmkraft. Dazu steigert der Drehschrauber das ausgeübte Drehmoment mit der Zeit und/oder er steigert das ausgeübte Drehmoment über den Drehwinkel. Der Anstieg des ausgeübte Drehmomentes erfolgt bis zu einem klemmkraftspezifischen Solldrehmoment und/oder bis zu einem klemmkraftspezifischen Solldrehwinkel. Das Solldrehmoment und/oder der Solldrehwinkel ist/sind am Drehschrauber einstellbar. Das Solldrehmoment und/oder der Solldrehwinkel wird/werden nachfolgend auch die Sollgrösse genannt.

Der Drehschrauber ist mit einer Signalisierung ausgerüstet. Sobald die eingestellte Sollgrösse erreicht ist, unterbricht der Drehschrauber die Ausübung des Drehmomentes. Die Signalisierung kann nach unterschiedlichen Funktionsprinzipien arbeiten. So bricht ein Knickschlüssel die Ausübung des Drehmomentes bei Erreichen der Sollgrösse automatisch ab. Ein Knackschlüssel löst bei Erreichen der Sollgrösse automatisch ein akustisches- oder optisches Signal aus. Ein anzeigender Drehschrauber zeigt das aktuell ausgeübte Drehmoment und/oder den aktuellen Solldrehwinkel auf einer Skala oder einem elektronischem Bildschirm an.

Solch ein Drehschrauber wird in vielen industriellen Fertigungsprozessen eingesetzt. Um sicherzustellen, dass der Drehschrauber auch tatsächlich die eingestellte Sollgrösse erzeugt, wird die Leistungsfähigkeit des Drehschraubers in zeitlichen Abständen geprüft.

Dazu legt die Richtlinie VDI/VDE 2647 vom Februar 2013 fest, was und wie geprüft werden soll. Die Prüfung der Leistungsfähigkeit des Drehschraubers wird Schraubfallsimulation genannt. Die Schraubfallsimulation erfolgt unter Verwendung einer Simulationseinrichtung, welche eine Bremseinheit und ein Prüfverbindungselement aufweist. Das Prüfverbindungselement ist um eine Drehachse drehbar. Die Bremseinheit und das Prüfverbindungselement sind starr miteinander verbunden. Über das Prüfverbindungselement kuppelt der Drehschrauber mit der Simulationseinrichtung.

Der mit der Simulationseinrichtung gekuppelte Drehschrauber wird aktiviert und übt ein Drehmoment auf das Prüfverbindungselement aus. Durch das ausgeübte Drehmoment beginnt sich das Prüfverbindungselement um die Drehachse zu drehen. Die Bremseinheit wird aktiviert und bremst das Prüfverbindungselement.

Die Simulationseinrichtung weist zudem eine Messeinheit mit einem Drehmomentaufnehmer und einem Drehwinkelaufnehmer auf. Der Drehmomentaufnehmer misst das Drehmoment und der Drehwinkelaufnehmer misst den Drehwinkel, um den sich das Prüfverbindungselement um die Drehachse dreht. Die Messeinheit ist zwischen der Bremseinheit und dem Prüfverbindungsmittel angeordnet.
Solch eine Simulationseinrichtung ist aus der Schrift WO2016/103147A1 oder aus der Schrift US5886246A1 bekannt. Die Schrift EP0849049A1 wiederum zeigt einen Drehmomentschlüssel zum Anziehen eines Schraubverbindungsteils wie eine Schraube oder eine Mutter mit einer Winkelmesseinrichtung. Mit dem Drehmomentschlüssel erfolgt zunächst ein Anziehen der Schraube oder Mutter bis zu einem vorgegebenen Setzdrehmoment, woraufhin die Winkelmesseinrichtung auf eine 0-Marke einer Winkelskala fixiert wird, um danach die Schraube oder Mutter weiter um einen definierten Drehwinkel anzuziehen, welcher Drehwinkel auf der Winkelmesseinrichtung ablesbar ist.

Der zeitliche Verlauf des gemessenen Drehmomentes bezüglich des gemessenen Drehwinkels wird graphisch als Drehmomentrate dargestellt. Um eine statistische Aussagekraft zu erlangen, wird die Schraubfallsimulation mehrmals durchgeführt. Die Drehmomentraten der mehrmals durchgeführten Schraubfallsimulation werden graphisch überlagert dargestellt. Für jede Drehmomentrate wird ein grösstes gemessene Drehmoment und ein dem grössten gemessenen Drehmoment korrespondierender grösster gemessener Drehwinkel ermittelt. Das arithmetische Mittel der grössten gemessenen Drehmomente wird mittleres Drehmoment genannt. Das arithmetische Mittel der grössten gemessenen Drehwinkel wird mittlerer Drehwinkel genannt. Zudem wird die Schraubfallsimulation für unterschiedliche eingestellte Solldrehmomente sowie für unterschiedlich hohe Drehmomentraten wiederholt.

Nun soll gemäss Richtlinie VDI/VDE 2647 vom Februar 2013 das Masseträgheitsmoment der sich drehenden Teile der Simulationseinrichtung keinen signifikanten Einfluss auf das mittlere Drehmoment haben. Die drehenden Teile der Simulationseinrichtung sind ein Rotor der Bremseinheit, eine Messscheibe der Messeinheit, das Prüfverbindungsmittel, usw. Für eine Schraubfallsimulation mit niedriger Drehmomentrate ist eine Abweichung des grössten gemessenen Drehwinkels von ±15% bezüglich des mittleren Drehwinkels zulässig. Und für eine Schraubfallsimulation mit hoher Drehmomentrate ist eine Abweichung des grössten gemessenen Drehwinkels von ±5% bezüglich des mittleren Drehwinkels zulässig.

Hieraus resultiert eine hohe Anforderung an die Rundlauf-Güte der sich drehenden Teile der Simulationseinrichtung. Insbesondere der Rotor der Bremseinheit und die Messscheibe der Messeinheit müssen bezüglich der Drehachse sehr geringe Unwuchten aufweisen. Diese hohen Anforderung an die Rundlauf-Güte verteuert die Fertigung und die Anschaffung der Simulationseinrichtung.

Eine erste Aufgabe der vorliegenden Erfindung ist es, eine kostengünstige Simulationseinrichtung für die Schraubfallsimulation eines Drehschraubers bereitzustellen, welche Simulationseinrichtung die Anforderungen der Richtlinie VDI/VDE 2647 vom Februar 2013 erfüllt und für die Schraubfallsimulation die geforderten zulässigen Abweichung des grössten gemessenen Drehwinkels bezüglich des mittleren Drehwinkels einhält.

Eine weitere Aufgabe der Erfindung besteht darin, ein Verfahren zur Durchführung der Schraubfallsimulation eines Drehschraubers unter Verwendung einer Simulationseinrichtung aufzuzeigen, welche Simulationseinrichtung die Anforderungen der Richtlinie VDI/VDE 2647 vom Februar 2013 erfüllt und für die Schraubfallsimulation die geforderten zulässigen Abweichung des grössten gemessenen Drehwinkels bezüglich des mittleren Drehwinkels einhält, und welches Verfahren einfach und rasch durchzuführen ist.

Und die Erfindung stellt sich die zusätzliche Aufgabe ein Verfahren zur Nachrüstung einer bestehenden Simulationseinrichtung für die Schraubfallsimulation eines Drehschraubers anzugeben, welche nachgerüstete Simulationseinrichtung die Anforderungen der Richtlinie VDI/VDE 2647 vom Februar 2013 erfüllt und für die Schraubfallsimulation die geforderten zulässigen Abweichung des grössten gemessenen Drehwinkels bezüglich des mittleren Drehwinkels einhält.

### Darstellung der Erfindung

Zumindest eine dieser Aufgaben wird durch die Merkmale des unabhängigen Anspruches gelöst.

Die Erfindung betrifft eine Simulationseinrichtung für die Schraubfallsimulation eines Drehschraubers so wie in Anspruch 1 definiert.

Weitere Ausbildungen des Gegenstandes der Simulationseinrichtung nach dem unabhängigen Anspruch werden in den abhängigen Ansprüchen beansprucht.

Die Erfindung betrifft auch ein Verfahren zur Durchführung der Schraubfallsimulation eines Drehschraubers unter Verwendung der Simulationseinrichtung nach einem der Ansprüche 1 bis 10; wobei in einem ersten Schritt des Verfahrens die Bremseinheit bezüglich der Nullmarke in einen Nullwinkel ausgerichtet wird; wobei in einem zweiten Schritt des Verfahrens der Drehschrauber mit dem Prüfverbindungselement gekuppelt wird; und wobei in einem dritten Schritt des Verfahrens die Schraubfallsimulation aus dem Nullwinkel heraus winkelsynchronisiert gestartet wird.

Die Erfinder haben überraschenderweise herausgefunden, dass die Anforderungen der Richtlinie VDI/VDE 2647 vom Februar 2013 an die zulässige Abweichung des gemessenen Drehwinkels bezüglich des mittleren Drehwinkels eingehalten werden, wenn die Schraubfallsimulation immer aus einem bezüglich einer Nullmarke ausgerichteten Nullwinkel heraus gestartet wird. Auf diese Weise befindet sich die drehenden Teile der Simulationseinrichtung immer in der gleichen definierten Ausgangslage der Drehbewegung. Unwuchten der sich drehenden Teile der Simulationseinrichtung werden so winkelsynchronisiert. Denn die Schraubfallsimulation wird mehrmals wiederholt, und die Unwuchten treten dann bezüglich des Nullwinkels winkelsynchronisiert auf. Und auch bei der nachfolgenden graphischen Überlagerung von Drehmomentraten der mehrmals durchgeführten Schraubfallsimulation erscheinen die von den Unwuchten herrührenden Abweichungen der grössten gemessenen Drehwinkel bezüglich des mittleren Drehwinkels winkelsynchronisiert. Das Anbringen der Nullmarke und die Ausrichtung der Bremseinheit in einen Nullwinkel bezüglich der Nullmarke ist kostengünstig zu bewerkstelligen, und auch die Durchführung des Verfahrens erfolgt einfach und rasch.

Zudem betrifft die Erfindung ein Verfahren zur Nachrüstung einer bestehenden Simulationseinrichtung zur Bildung der Simulationseinrichtung nach einem der Ansprüche 1 bis 10, welche bestehenden Simulationseinrichtung einen bestehenden Drehwinkelaufnehmer und eine bestehende Messscheibe ohne eine Nullmarke aufweist; wobei in einem ersten Schritt des Verfahrens die bestehende Messscheibe ausgebaut wird; wobei in einem zweiten Schritt des Verfahrens eine Messscheibe mit einer Nullmarke bereitgestellt wird; wobei in einem dritten Schritt des Verfahrens die bereitgestellte Messscheibe anstelle der bestehenden Messscheibe eingebaut wird; und wobei in einem vierten Schritt des Verfahrens eine Anordnung des bestehenden Drehwinkelaufnehmers bezüglich der Nullmarke als Nullwinkel definiert wird.

Alternativ betrifft die Erfindung zudem ein Verfahren zur Nachrüstung einer bestehenden Simulationseinrichtung für die Schraubfallsimulation eines Drehschraubers zur Bildung der Simulationseinrichtung nach einem der Ansprüche 1 bis 10, welche bestehende Simulationseinrichtung einen bestehenden Drehwinkelaufnehmer und eine bestehende Messscheibe mit Winkelmarken, aber ohne eine Nullmarke aufweist; wobei in einem alternativen ersten Schritt des Verfahrens eine der Winkelmarken der bestehenden Messscheibe als Nullmarke definiert wird; und wobei in einem vierten Schritt des Verfahrens eine Anordnung des bestehenden Drehwinkelaufnehmers bezüglich der Nullmarke als Nullwinkel definiert wird.

### Kurze Beschreibung der Zeichnungen

Im Folgenden wird die Erfindung beispielhaft unter Beizug der Figuren näher erklärt. Es zeigen
- Fig. 1: eine schematische Darstellung der Simulationseinrichtung 1 für die Schraubfallsimulation eines Drehschraubers 2;
- Fig. 2: eine Ansicht eines Teiles einer ersten Ausführungsform einer Messeinheit 12 der Simulationseinrichtung 1 nach Fig. 1 ohne winkelsynchronisierte Ausrichtung einer Nullmarke 12.12 bezüglich eines Nullwinkels 12.22;
- Fig. 3: eine Ansicht eines Teiles der ersten Ausführungsform der Messeinheit 12 nach Fig. 2 mit winkelsynchronisierter Ausrichtung der Nullmarke 12.12 bezüglich des Nullwinkels 12.22;
- Fig. 4: eine Ansicht eines Teiles einer zweiten Ausführungsform einer Messeinheit 12 der Simulationseinrichtung 1 nach Fig. 1 ohne winkelsynchronisierte Ausrichtung einer Nullmarke 12.12 bezüglich eines Nullwinkels 12.22;
- Fig. 5: eine Ansicht eines Teiles der zweiten Ausführungsform der Messeinheit 12 nach Fig. 4 mit winkelsynchronisierter Ausrichtung der Nullmarke 12.12 bezüglich des Nullwinkels 12.22;
- Fig. 6: schematisch eine Abfolge von Schritten IS bis VIIS des Verfahrens zur Durchführung der Schraubfallsimulation eines Drehschraubers unter Verwendung der Simulationseinrichtung 1 nach Fig. 1;
- Fig. 7: eine Darstellung von überlagerten Drehmomentraten R1, R2, R3 einer nichtwinkelsynchronisierten Schraubfallsimulation unter Verwendung der Simulationseinrichtung 1 nach Fig. 1;
- Fig. 8: eine Darstellung von überlagerten Drehmomentraten R1, R2, R3 einer winkelsynchronisierten Schraubfallsimulation unter Verwendung der Simulationseinrichtung 1 nach Fig. 1; und
- Fig. 9: schematisch eine Abfolge von Schritten IN, IN' bis VIIN des Verfahrens zur Nachrüstung einer bestehenden Simulationseinrichtung 1'.

### Wege zur Ausführung der Erfindung

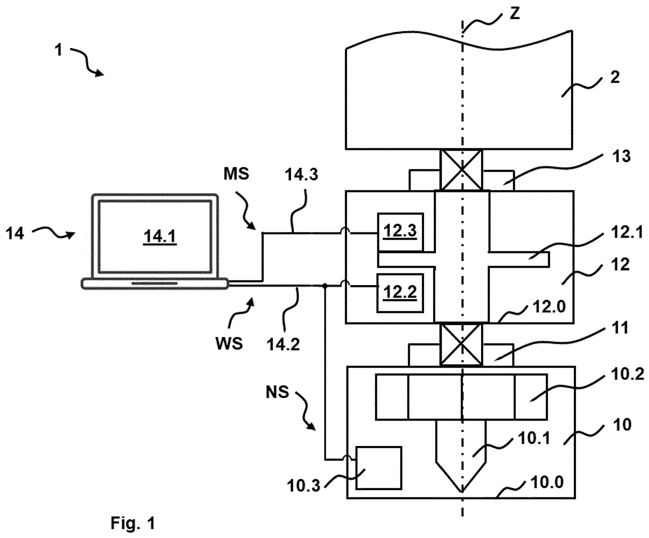

Fig. 1 zeigt eine schematische Darstellung einer Simulationseinrichtung 1 für die Schraubfallsimulation eines Drehschraubers 2.

Der Drehschrauber 2 ist gemäss Richtlinie VDI/VDE 2647 vom Februar 2013 ein motorisch betriebenes Schraubwerkzeug. Der Drehschrauber ist aktivierbar und der aktivierte Drehschrauber dreht kontinuierlich um eine Drehachse Z und übt dabei ein Drehmoment aus.

Der Drehschrauber 2 steigert das ausgeübte Drehmoment mit der Zeit und/oder er steigert das ausgeübte Drehmoment über den Drehwinkel. Der Anstieg des ausgeübte Drehmomentes erfolgt bis zu einem Solldrehmoment und/oder bis zu einem Solldrehwinkel. Das Solldrehmoment und/oder der Solldrehwinkel ist/sind am Drehschrauber 2 einstellbar. Das Solldrehmoment und/oder der Solldrehwinkel wird/werden nachfolgend auch die Sollgrösse genannt.

Der Drehschrauber 2 ist mit einer Signalisierung ausgerüstet. Sobald die eingestellte Sollgrösse erreicht ist, unterbricht der Drehschrauber 2 die Ausübung des Drehmomentes. Die Signalisierung kann nach unterschiedlichen Funktionsprinzipien arbeiten. Der Drehschrauber 2 kann ein Knickschlüssel sein, welcher Knickschlüssel bei Erreichen des Solldrehmomentes automatisch abknickt. Der Drehschrauber 2 kann ein Knackschlüssel sein, welcher Knackschlüssel bei Erreichen des Solldrehmomentes automatisch ein akustisches- oder optisches Signal auslöst. Der Drehschrauber 2 kann ein anzeigender Drehschrauber sein, welcher anzeigende Drehschrauber auf einer en Skala oder einem elektronischem Bildschirm das ausgeübte Drehmoment anzeigt.

Die Simulationseinrichtung 1 weist ein Prüfverbindungselement 13 auf. Über das Prüfverbindungselement 13 kuppelt der Drehschrauber 2 starr mit der Simulationseinrichtung 1. Die durch das Prüfverbindungselement 13 bewerkstelligte Kuppelung von Drehschrauber 2 und Simulationseinrichtung 1 ist lösbar.

Die Simulationseinrichtung 1 weist eine Messeinheit 12 auf. Die Messeinheit 12 ist in einem hohlzylinderförmigen Messeinheitgehäuse 12.0 aus widerstandsfähigem Metall angeordnet. Das Messeinheitgehäuse 12.0 weist einen Hohlraum auf. Im Hohlraum ist eine Messscheibe 12.1 angeordnet.

Die Messscheibe 12.1 ist ein zylinderförmiger Körper, aus widerstandsfähigem Metall. Das Prüfverbindungselement 13 ist starr mit der Messscheibe 12.1 verbunden. Der mit dem Prüfverbindungselement 13 gekuppelte Drehschrauber 2 wird aktiviert und übt ein Drehmoment auf das Prüfverbindungselement 13 aus. Durch das ausgeübte Drehmoment beginnen sich das Prüfverbindungselement 13 und die mit ihr starr verbundene Messscheibe 12.1 um die Drehachse Z zu drehen. Die Messscheibe 12.1 weist eine Messoberfläche 12.10 auf, welche Messoberfläche 12.10 in einer Ebene liegt, deren Normale parallel zur Drehachse Z verläuft. Die Messscheibe 12.1 weist Winkelmarken 12.11 auf, welche Winkelmarken 12.11 auf der Messoberfläche 12.10 angeordnet sind.

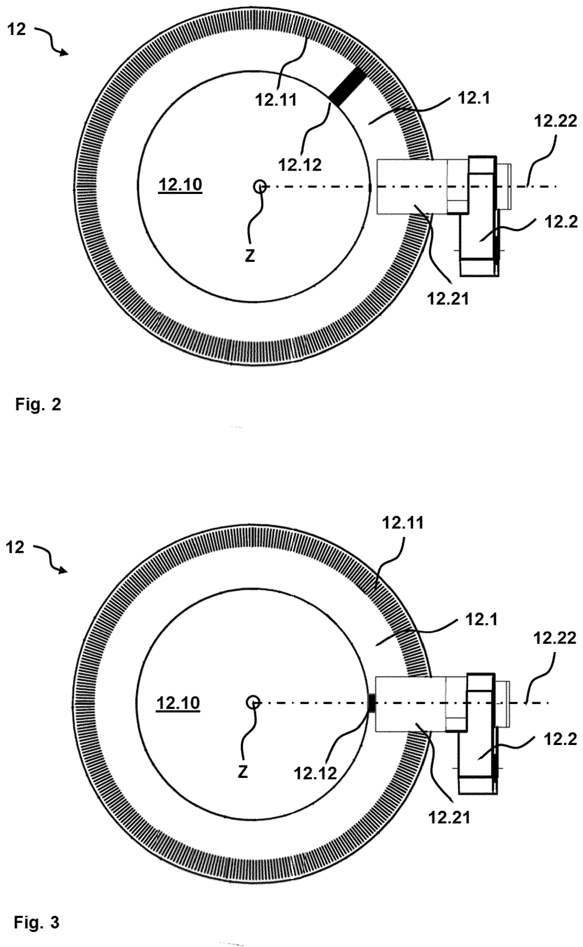

In der ersten Ausführungsform der Messscheibe 12.1 nach Fig. 2 und 3 sind die Winkelmarken 12.11 helle und dunkle Striche. Die hellen und dunklen Striche sind in einem ersten Bereich auf der Messoberfläche 12.10 angeordnet, welcher erste Bereich einen konstanten radialen Abstand zur Drehachse Z aufweist. Die hellen und dunklen Striche sind in Drehrichtung gesehen, äquidistant zueinander angeordnet. Die hellen und dunklen Striche sind Inkrementalcodewerte. Die Inkrementalcodewerte bezeichnen Drehwinkel bei der Drehbewegung der Messscheibe 12.1 um die Drehachse Z. Die Inkrementalcodewerte bezeichnen den Drehwinkel bei der Drehbewegung der Messscheibe 12.1 um die Drehachse Z nicht eineindeutig.

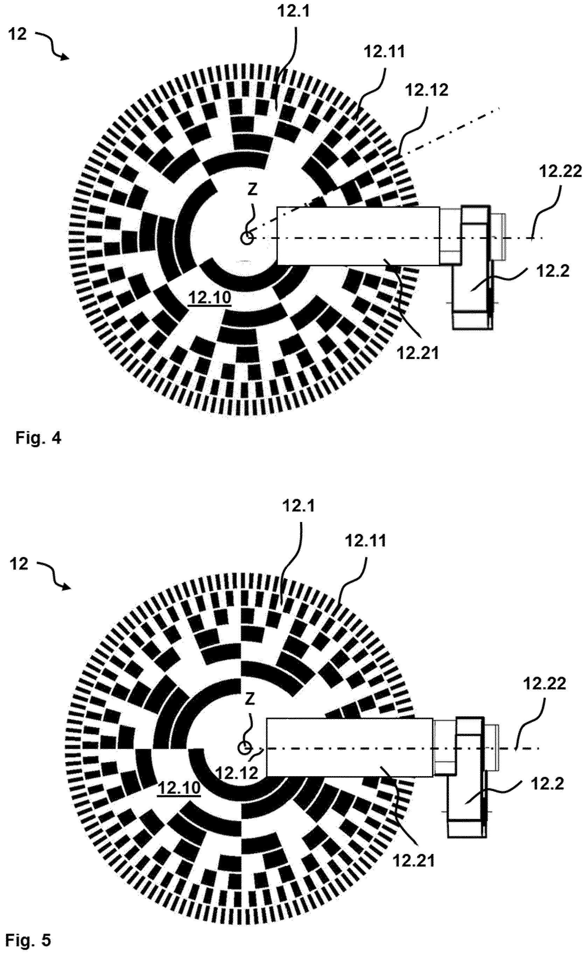

In der zweiten Ausführungsform der Messscheibe 12.1 nach Fig. 4 und 5 sind die Winkelmarken 12.11 ein Gray-Code. Der Gray-Code ist weitgehend auf der gesamten Messoberfläche 12.10 angeordnet. Der Gray-Code weist eine Vielzahl von hellen und dunkeln Codewerten auf. Die hellen und dunklen Codewerte sind in Drehrichtung gesehen, nebeneinander angeordnet. Die hellen und dunklen Codewerte sind Absolutcodewerte, d.h. jeder Absolutcodewert hat einen eineindeutigen Wert. Die Absolutcodewerte bezeichnen den Drehwinkel bei der Drehbewegung der Messscheibe 12.1 um die Drehachse Z eineindeutig.

Die Simulationseinrichtung 1 weist einen Drehwinkelaufnehmer 12.2 auf. Der Drehwinkelaufnehmer 12.2 ist ortsfest am Messeinheitgehäuse 12.0 angebracht. Der Drehwinkelaufnehmer 12.2 misst den Drehwinkel, um den sich die Messscheibe 12.1 um die Drehachse Z dreht. Der Drehwinkelaufnehmer 12.2 ist oberhalb der Messoberfläche 12.10 der Messscheibe 12.1 angeordnet. Der Drehwinkelaufnehmer 12.2 weist ein Sensorelement 12.21 auf. Das Sensorelement 12.21 erfasst Winkelmarken 12.11. Vorzugsweise ist der Drehwinkelaufnehmer 12.2 ein optischer Drehwinkelaufnehmer mit einem optischen Sensorelement, welcher optische Drehwinkelaufnehmer Licht auf die Winkelmarken 12.11 aussendet und mit dem optischen Sensorelement ausgesandtes Licht, das von den Winkelmarken 12.11 reflektiert worden ist, erfasst. Wenn sich nun die Winkelmarken 12.11 um die Drehachse Z drehen, so ändert sich auch ein vom optischen Sensorelement erfasster Abschnitt der Winkelmarken 12.11.

In der ersten Ausführungsform der Winkelmarken 12.11 nach Fig. 2 und 3 zählt der Drehwinkelaufnehmer 12.2 die nach einer Abschnittsänderung der Winkelmarken 12.11 vom Sensorelement 12.21 erfasste Anzahl der Inkrementalcodewerte und erzeugt dafür ein entsprechendes Drehwinkelsignal WS.

In der zweiten Ausführungsform der Winkelmarken 12.11 nach Fig. 4 und 5 erkennt der Drehwinkelaufnehmer 12.2 den nach einer Abschnittsänderung der Winkelmarken 12.11 vom Sensorelement 12.21 erfassten Absolutcodewert und erzeugt dafür ein entsprechendes Drehwinkelsignal WS.

Vorzugsweise misst der Drehwinkelaufnehmer 12.2 den Drehwinkel, um den sich die Messscheibe 12.1 um die Drehachse Z dreht, mit einer Winkelauflösung von kleiner/gleich 1°. Der Drehwinkelaufnehmer 12.2 erzeugt für den gemessenen Drehwinkel ein Drehwinkelsignal WS. Das Drehwinkelsignal WS wird über eine Drehwinkelsignalleitung 14.2 abgeleitet. Vorzugsweise misst der Drehwinkelaufnehmer 12.2 den Drehwinkel mit einer Messfrequenz von grösser/gleich 2000Hz.

Bei Kenntnis der vorliegenden Erfindung kann der Fachmann anstatt eines optischen Drehwinkelaufnehmers mit einem optischen Sensorelement auch einen nach einem anderen Funktionsprinzip arbeitenden Drehwinkelaufnehmer wie einen magnetischen Drehwinkelaufnehmer mit einem magnetischen Sensorelement, einen kapazitiven Drehwinkelaufnehmer mit einem kapazitiven Sensorelement, usw. verwenden.

Die Simulationseinrichtung 1 weist einen Drehmomentaufnehmer 12.3 auf. Der Drehmomentaufnehmer 12.3 ist an der Messscheibe 12.1 angebracht. Der Drehmomentaufnehmer 12.3 misst die Kraft in einem senkrechten Abstand von der Drehachse Z entlang einer Kraftlinie als Drehmoment. Vorzugsweise weist der Drehmomentaufnehmer 12.3 mehrere Dehnungsmessstreifen auf. Die Dehnungsmessstreifen sind bezüglich der Kraftlinie derart an der Messscheibe 12.1 angebracht, dass sie unter der Wirkung der Kraft gedehnt und gestaucht werden. Durch die Dehnung und Stauchung ändert sich ein elektrischer Widerstand der Dehnungsmessstreifen. Die Dehnungsmessstreifen sind in einer Brückenschaltung verschaltet. Die Änderung des elektrischen Widerstandes erzeugt in der Brückenschaltung der Dehnungsmesstreifen ein elektrisches Spannungssignal, welches elektrische Spannungssignal proportional zur Grösse des Drehmomentes ist. Das so vom Drehmomentaufnehmer 12.3 erzeugte elektrische Spannungssignal wird als Drehmomentsignal MS über eine Drehmomentsignalleitung 14.3 abgeleitet. Vorzugsweise misst der Drehmomentaufnehmer 12.3 das Drehmoment in unterschiedlichen Messbereichen wie 0.4 bis 2Nm, 2 bis 10Nm, 10 bis 50Nm, 50 bis 250Nm, 100 bis 500Nm, 400 bis 2000Nm, 1200 bis 6000Nm, usw. Vorzugsweise misst der Drehmomentaufnehmer 12.3 das Drehmoment mit einer Messfrequenz von grösser/gleich 2000Hz.

Die Simulationseinrichtung 1 weist eine Bremseinheit 10 auf. Die Bremseinheit 10 ist in einem hohlzylinderförmigen Bremseinheitgehäuse 10.0 aus widerstandsfähigem Metall angeordnet. Das Bremseinheitgehäuse 10.0 weist einen Hohlraum auf. Im Hohlraum sind ein Bremselement 10.1 und ein Rotor 10.2 angeordnet.

Die Simulationseinrichtung 1 weist ein Kupplungselement 11 auf. Das Kupplungselement 11 ist entlang der Drehachse Z gesehen, zwischen dem Rotor 10.1 und der Messeinheit 12 angeordnet. Das Kupplungselement 11 ist starr sowohl mit dem Rotor 10.1 als auch starr mit der Messscheibe 12.1 verbunden. Das Kupplungselement 11 kuppelt den Rotor 10.1 mit der Messscheibe 12.1.

Das Bremselement 10.1 wird vorzugsweise hydraulisch oder elektrisch betrieben. Das Bremselement 10.1 ist aktivierbar und das aktivierte Bremselement 10.1 wandelt hydraulische oder elektrische Energie in Kraft. Der Rotor 10.2 ist ein zylinderförmiger Körper aus Metall und starr mit dem Bremselement 10.1 verbunden ist. Die vom Bremselement 10.1 erzeugte Kraft wirkt auf den Rotor 10.2 und dreht den Rotor 10.2 um die Drehachse Z. Die Drehrichtung des Rotors 10.2 um die Drehachse Z ist entgegengesetzt zur Drehrichtung des Prüfverbindungselementes 13 um die Drehachse Z. Dadurch bremst das aktivierte Bremselement 10.1 das Prüfverbindungselement 13.

Die Bremseinheit 10 weist auch eine Steuer- und Regeleinheit 10.3 auf. Die Steuer- und Regeleinheit 10.3 aktiviert und deaktiviert das Bremselement 10.1. Die Steuer- und Regeleinheit 10.3 regelt und steuert aber auch Grösse und Zeitdauer der erzeugten Kraft sowie Geschwindigkeit, Beschleunigung und Zeitdauer der Drehbewegung des Rotors 10.2. Vorzugsweise dreht sich der Rotor 10.2 mit einer Drehzahl in einem Drehzahlbereich von 10 bis 3000 Umdrehungen pro Minute.

Die Messscheibe 12.1 weist eine Nullmarke 12.12 auf. Vorzugsweise ist die Nullmarke 12.12 auf der Messoberfläche 12.10 angeordnet.

In der ersten Ausführungsform der Messscheibe 12.1 nach Fig. 2 und 3 ist die Nullmarke 12.12 ein dunkler Strich. Der dunkle Strich ist in einem weiteren Bereich auf der Messoberfläche 12.10 angeordnet, welcher dunkle Strich einen kleineren radialen Abstand zur Drehachse Z aufweist, als der erste Bereich, in dem die Winkelmarken 12.11 angeordnet sind. Die Nullmarke 12.12 ist somit nicht Bestandteil der Winkelmarken 12.11. Die Nullmarke 12.12 und die Winkelmarken 12.11 sind räumlich voneinander getrennt auf der Messoberfläche 12.10 angeordnet. Eine solche Messscheibe 12.1 mit Nullmarke 12.12 und Winkelmarken 12.11 in voneinander getrennten Bereichen ist kostengünstig. Das Sensorelement 12.21 erfasst die im weiteren Bereich angeordnete Nullmarke 12.12 unabhängig von den im ersten Bereich angeordneten Winkelmarken 12.11. Für die vom Sensorelement 12.21 erfasste Nullmarke 12.12 erzeugt der Drehwinkelaufnehmer 12.2 ein Nullmarkensignal NS. Das Nullmarkensignal NS wird über die Drehwinkelsignalleitung 14.2 abgeleitet.

In der zweiten Ausführungsform der Messscheibe 12.1 nach Fig. 4 und 5 ist die Nullmarke 12.12 ein definierter Absolutcodewert des Gray-Codes der Winkelmarken 12.11. Die Nullmarke 12.12 ist somit Bestandteil der Winkelmarken 12.11. Die Nullmarke 12.12 und die Winkelmarken 12.11 sind räumlich nicht getrennt voneinander auf der Messoberfläche 12.10 angeordnet. Das Sensorelement 12.21 erfasst die Nullmarke 12.12 zusammen mit den Winkelmarken 12.11. Für die vom Sensorelement 12.21 erfasste Nullmarke 12.12 erzeugt der Drehwinkelsensor 12.2 ein Nullmarkensignal NS. Das Nullmarkensignal NS wird über die Drehwinkelsignalleitung 14.2 abgeleitet.

Der Drehwinkelaufnehmer 12.2 ist bezüglich der Nullmarke 12.12 in einem Nullwinkel 12.22 definiert angeordnet. Der Drehwinkelaufnehmer 12.2 ist ortsfest an der Simulationseinrichtung 1 angebracht. Vorteilhafterweise ist der Drehwinkelaufnehmer 12.2 ortsfest am Messeinheitgehäuse 12.0 angebracht.

In der Ausführungsform des Drehwinkelaufnehmers 12.2 nach Fig. 2 bis 5 bezeichnet der Nullwinkel 12.22 eine grösste radiale Ausdehnung des Drehwinkelaufnehmers 12.2 entlang einer Radialrichtung, welche Radialrichtung senkrecht zur Drehachse Z verläuft. Vorteilhafterweise liegt der Nullwinkel 12.22 am Ort des Sensorelementes 12.21.

Der Nullwinkel 12.22 bildet für die Durchführung der Schraubfallsimulation eine definierte Ausgangslage der Drehbewegung um die Drehachse Z. Denn die Nullmarke 12.12 und der Nullwinkel 12.22 ermöglichen eine winkelsynchronisierte Ausrichtung der sich drehenden Teile der Simulationseinrichtung 1. Die sich drehenden Teile der Simulationseinrichtung 1 sind das Bremselement 10.1, der Rotor 10.2, das Kupplungselement 11, die Messcheibe 12.1, der Drehmomentaufnehmer 12.3 und das Prüfverbindungselement 13. Da die sich drehenden Teile starr miteinander verbunden sind, genügt eine Ausrichtung der Nullmarke 12.12 der Messscheibe 12.1 mit dem Nullwinkel 12.22 des ortsfesten Drehwinkelaufnehmers 12.2 um eine winkelsynchronisierte Ausrichtung aller sich drehenden Teile der Simulationseinrichtung 1 zu erhalten. Die Fig. 2 und 4 zeigen Nullmarke 12.12 und Nullwinkel 12.22 in einer nicht winkelsynchronisierten Ausrichtung. Die Fig. 3 und 5 zeigen Nullmarke 12.12 und Nullwinkel 12.22 in einer winkelsynchronisierten Ausrichtung.

Die Simulationseinrichtung 1 weist eine Auswerteeinheit 14 auf. Die Auswerteeinheit 14 weist einen Prozessor, einen Datenspeicher, eine Drehwinkelsignalleitung 14.2, eine Drehmomentsignalleitung 14.3 und ein Ausgabegerät auf. Ein Auswerteprogramm 14.1 ist aus dem Datenspeicher in den Prozessor ladbar. Das in den Prozessor geladene Auswerteprogramm 14.1 ist geeignet, über eine Schnittstelle ein Drehwinkelsignal WS von der Drehwinkelsignalleitung 14.2 einzulesen. Das in den Prozessor geladene Auswerteprogramm 14.1 ist geeignet, über eine Schnittstelle ein Drehmomentsignal MS von der Drehmomentsignalleitung 14.3 einzulesen.

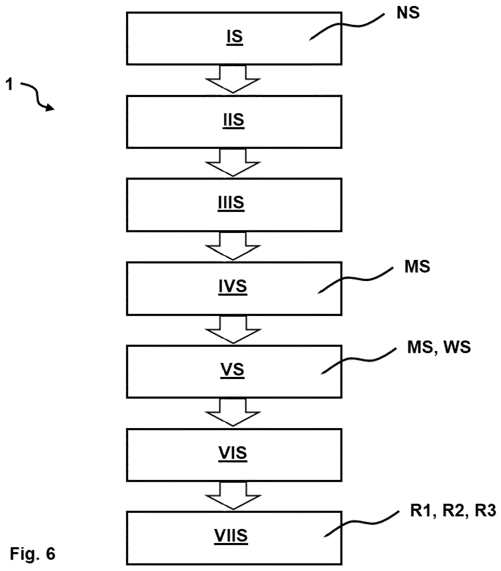

Wie in Fig. 6 dargestellt, erfolgt das Verfahren zur Durchführung der Schraubfallsimulation unter Verwendung der Simulationseinrichtung 1 in mehreren Schritten IS bis VIIS.

In einem ersten Schritt IS des Verfahrens wird die Bremseinheit 10 bezüglich der Nullmarke 12.12 in einen Nullwinkel 12.22 winkelsynchronisiert ausgerichtet. Dies ist in den Fig. 2 bis 5 veranschaulicht. In Fig. 2 und 4 sind Nullmarke 12.12 und Nullwinkel 12.22 zueinander winkelversetzt ausgerichtet, während Nullmarke 12.12 und Nullwinkel 12.22 in Fig. 3 und 5 zueinander winkelsynchronisiert ausgerichtet sind. Die Ausrichtung von Nullmarke 12.12 und Nullwinkel 12.22 erfolgt durch das Bremselement 10.1. Das Bremselement 10.1 wird von der Steuer- und Regeleinheit 10.3 aktiviert. Das aktivierte Bremselement 10.1 treibt den Rotor 10.2 und somit auch die über das Kupplungselement 11 mit dem Rotor 10.2 starr verbundene Messcheibe 12.1 zu einer Drehbewegung um die Drehachse Z an. Sobald das Sensorelement 12.21 die Nullmarke 12.12 der sich drehenden Messscheibe 12.1 erfasst, erzeugt der Drehwinkelaufnehmer 12.2 ein Nullmarkensignal NS, welches Nullmarkensignal NS über die Drehwinkelsignalleitung 14.2 zur Steuer- und Regeleinheit 10.3 abgeleitet wird. Über eine Schnittstelle liest die Steuer- und Regeleinheit 10.3 das Nullmarkensignal NS von der Drehwinkelsignalleitung 14.2 ein. Für ein eingelesenes Nullmarkensignal NS deaktiviert die Steuer- und Regeleinheit 10.3 das Bremselement 10.1. Die Nullmarke 12.12 ist nun bezüglich des Nullwinkels 12.2 winkelsynchronisiert.

In einem zweiten Schritt IIS des Verfahrens wird am Drehschrauber 2 ein Solldrehmoment eingestellt. Der Drehschrauber 2 wird mit dem Prüfverbindungselement 13 gekuppelt.

In einem dritten Schritt IIIS des Verfahrens wird die Schraubfallsimulation aus dem Nullwinkel 12.22 heraus gestartet. Dazu wird der Drehschrauber 2 aktiviert.

Das mit dem Prüfverbindungselement 13 gekuppelte Drehschrauber 2 übt ein zeitlich über den Drehwinkel ansteigendes Drehmoment auf das Prüfverbindungselement 13 und die starr mit dem Prüfverbindungselement 13 verbundene Messscheibe 12.1 aus. Dadurch drehen sich das Prüfverbindungselement 13 und die Messscheibe 12.1 in einer Drehrichtung um die Drehachse Z.

Die Bremseinheit 10 wird aktiviert und bremst das Prüfverbindungselement 13. Dazu wird das Bremselement 10.1 von der Steuer- und Regeleinheit 10.3 aktiviert. Das aktivierte Bremselement 10.1 dreht den Rotor 10.2 in einer zur Drehrichtung des Prüfverbindungselementes 13 entgegengesetzten Drehrichtung um die Drehachse Z an. Da der Rotor 10.2 über das Kupplungselement 11 starr mit der Messscheibe 12.1 verbunden ist, und da die Messscheibe 12.1 starr mit dem Prüfverbindungselement 13 verbunden ist, wird dadurch die Drehbewegung des Prüfverbindungselementes 13 um die Drehachse Z gebremst.

In einem vierten Schritt IVS des Verfahrens wird begonnen, das Drehmoment zu messen. Dazu beginnt der Drehmomentaufnehmer 12.3 ab einem vordefinierten Schwellmoment das Drehmoment zu messen. Vorzugsweise beträgt das Schwellmoment 10% des Solldrehmomentes. Der Drehmomentaufnehmer 12.3 erzeugt für das gemessene Drehmoment ein Drehmomentsignal MS. Das Drehmomentsignal MS wird über die Drehmomentsignalleitung 14.3 zur Auswerteeinheit 14 abgeleitet und vom Auswerteprogramm 14.1 eingelesen.

In einem fünften Schritt VS des Verfahrens wird begonnen, den Drehwinkel zu messen. Ab einem vordefinierten Winkelstartmoment wird vom Drehwinkelaufnehmer 12.2 der Drehwinkel gemessen. Vorzugsweise beträgt das Winkelstartmoment 50% des Solldrehmomentes. Der Drehwinkelaufnehmer 12.2 erzeugt für den gemessene Drehwinkel ein Drehwinkelsignal WS. Das Drehwinkelsignal WS wird über die Drehwinkelsignalleitung 14.2 zur Auswerteeinheit 14 abgeleitet und vom Auswerteprogramm 14.1 eingelesen.

In einem sechsten Schritt VIS des Verfahrens wird erfasst, ob das eingestellte Solldrehmoment ausgeübt wird. Sobald das eingestellte Solldrehmoment ausgeübt wird, reagiert der Drehschrauber 2. Je nach Funktionsprinzip, nach dem der Drehschrauber 2 arbeitet, ist seine Reaktion verschieden. Ein Knickschlüssel bricht bei Ausübung des eingestellten Solldrehmomentes die Ausübung von Drehmoment ab. Ein Knackschlüssel löst bei Ausübung des eingestellten Solldrehmomentes ein akustisches- oder optisches Signal aus. Ein anzeigender Drehschrauber zeigt das ausgeübte Solldrehmoment an. Die Reaktion des Drehschraubers 2 wird erfasst und das Bremselement 10.1 wird von der Steuer- und Regeleinheit 10.3 deaktiviert. Auch die Messungen vom Drehmoment durch den Drehmomentaufnehmer 12.3 und vom Drehwinkel durch den Drehwinkelaufnehmer 12.2 werden beendet.

In einem siebten Schritt VIIS des Verfahrens wird der zeitliche Verlauf der gemessenen Drehmomentsignale MS bezüglich der gemessenen Drehwinkelsignale WS graphisch als Drehmomentrate R1, R2, R3 dargestellt. Dazu werden vom Auswerteprogramm 14.1 eingelesene Drehmomentsignale MS und eingelesene Drehmomentsignale WS auf dem Bildschirm der Auswerteinheit 14 graphisch als Drehmomentrate R1, R2, R3 dargestellt. Um eine statistische Aussagekraft zu erlangen, wird die Schraubfallsimulation mehrmals durchgeführt. Die mehrmals gemessenen Drehmomentsignale MS und Drehwinkelsignale WS werden vom Auswerteprogramm 14.1 eingelesen und graphisch als überlagerte Drehmomentraten R1, R2, R3 dargestellt.

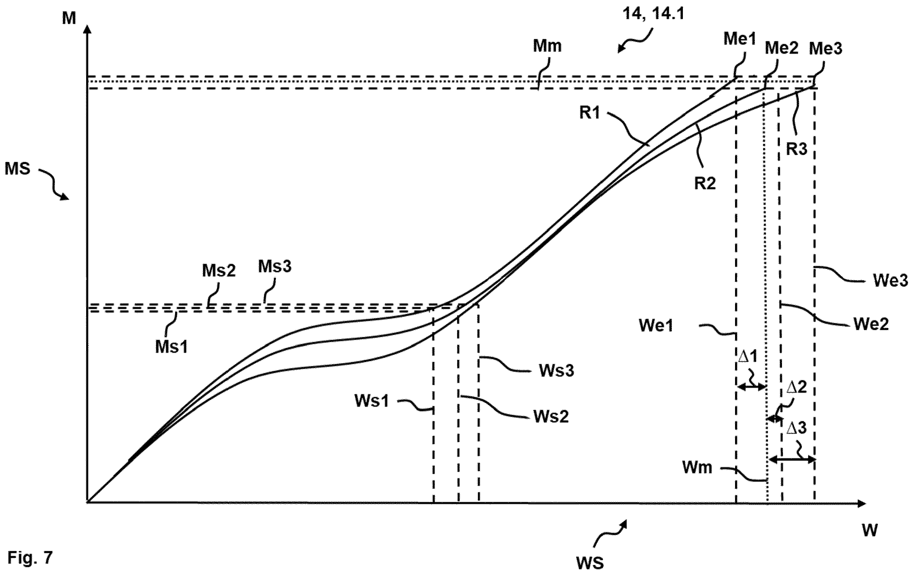

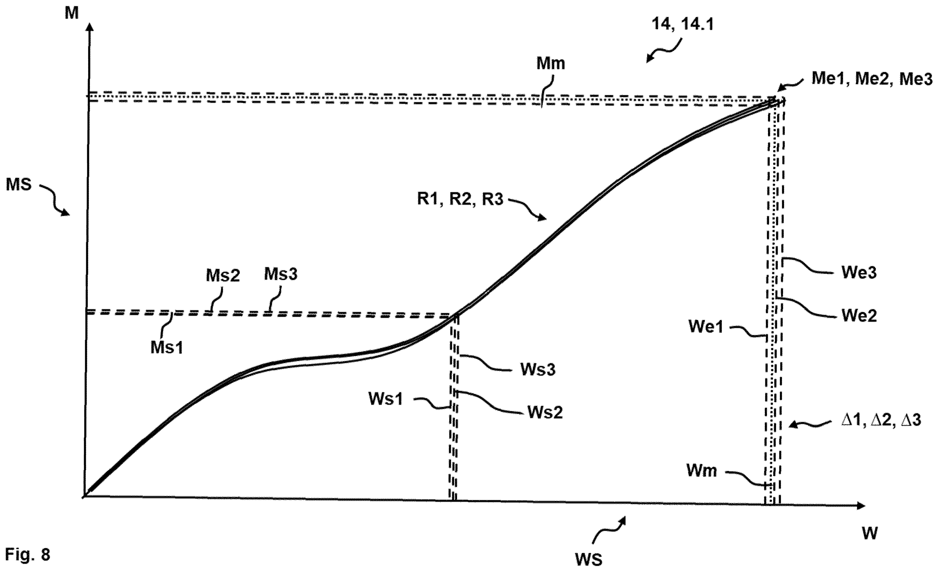

Dies ist beispielhaft in den Fig. 7 und 8 zu sehen. Dabei zeigt Fig. 7 überlagerte Drehmomentraten R1, R2, R3 einer nichtwinkelsynchronisierten Schraubfallsimulation unter Verwendung der Simulationseinrichtung 1. Und Fig. 8 zeigt überlagerte Drehmomentraten R1, R2, R3 einer winkelsynchronisierten Schraubfallsimulation unter Verwendung der Simulationseinrichtung 1. In den dargestellten Graphen ist als Ordinate ein Drehmoment M und als Abszisse ein Drehwinkel W aufgetragen. Ab dem Startdrehmoment sind Drehmomentsignale MS und Drehwinkelsignale WS gemessen worden. Für jede Drehmomentrate R1, R2, R3 sind gemessene Startdrehmomentsignale Ms1, Ms2, Ms3 und gemessene Startdrehwinkelsignale Ws1, Ws2, Ws3 als gestrichelte Linien markiert. Im Beispiel sind drei Drehmomentraten R1, R2, R3 überlagert dargestellt, gemäss Richtlinie VDI/VDE 2647 vom Februar 2013 werden aber pro Schraubfallsimulation 25 Drehmomentraten überlagert.

Für jede Drehmomentrate R1, R2, R3 werden vom Auswerteprogramm 14.1 ein grösstes gemessenes Drehmomentsignal Me1, Me2, Me3 und ein dem grössten gemessenen Drehmomentsignal Me1, Me2, Me3 korrespondierendes grösstes gemessenes Drehwinkelsignal We1, We2, We3 ermittelt. In den Fig. 7 und 8 sind die grössten gemessenen Drehmomentsignale Me1, Me2, Me3 als gestrichelte Linien markiert. Und auch die grössten gemessenen Drehwinkelsignale We1, We2, We3 sind in den Fig. 7 und 8 als gestrichelte Linien markiert.

Vom Auswerteprogramm 14.1 wird ein arithmetisches Mittel der grössten gemessenen Drehmomentsignale Me1, Me2, Me3 gebildet, dieses arithmetische Mittel wird mittleres Drehmoment Mm genannt. In den Fig. 7 und 8 ist das mittlere Drehmoment Mm als punktierte Linie markiert.

Vom Auswerteprogramm 14.1 wird ein arithmetisches Mittel der grössten gemessenen Drehwinkelsignale We1, We2, We3 gebildet, dieses arithmetische Mittel wird mittlerer Drehwinkel Wm genannt. In den Fig. 7 und 8 ist der mittlere Drehwinkel Wm als punktierte Linie markiert.

In der winkelsynchronisierten Schraubfallsimulation in Fig. 8 weisen die Startdrehwinkelsignale Ws1, Ws2, Ws3 kleinere Abstände zueinander auf als in der nichtwinkelsynchronisierten Schraubfallsimulation in Fig. 7. Und auch die grössten gemessenen Drehwinkelsignale We1, We2, We3 weisen in der winkelsynchronisierten Schraubfallsimulation in Fig. 8 kleinere Abstände zueinander auf als in der nichtwinkelsynchronisierten Schraubfallsimulation in Fig. 7. Die kleineren Abstände der Startdrehwinkelsignale Ws1, Ws2, Ws3 zueinander und der grössten gemessenen Drehwinkelsignale We1, We2, We3 zueinander stammen von Unwuchten der sich drehenden Teile der Simulationseinrichtung 1 her. Bei der nichtwinkelsynchronisierten Schraubfallsimulation treten die Unwuchten winkelversetzt zueinander auf, bei der winkelsynchronisierten Schraubfallsimulation hingegen sind die Unwuchten winkelsynchronisiert.

Hieraus folgt, dass bei der winkelsynchronisierten Schraubfallsimulation in Fig. 8 auch die Abweichungen Δ1, Δ2, Δ3 der grössten gemessenen Drehwinkelsignale We1, We2, We3 vom mittleren Drehwinkel Wm kleiner sind als bei der nichtwinkelsynchronisierten Schraubfallsimulation in Fig. 7. Insbesondere erfüllt die winkelsynchronisierte Schraubfallsimulation die Anforderungen der Richtlinie VDI/VDE 2647 vom Februar 2013 an die zulässige Abweichung des grössten gemessenen Drehwinkels bezüglich des mittleren Drehwinkels.

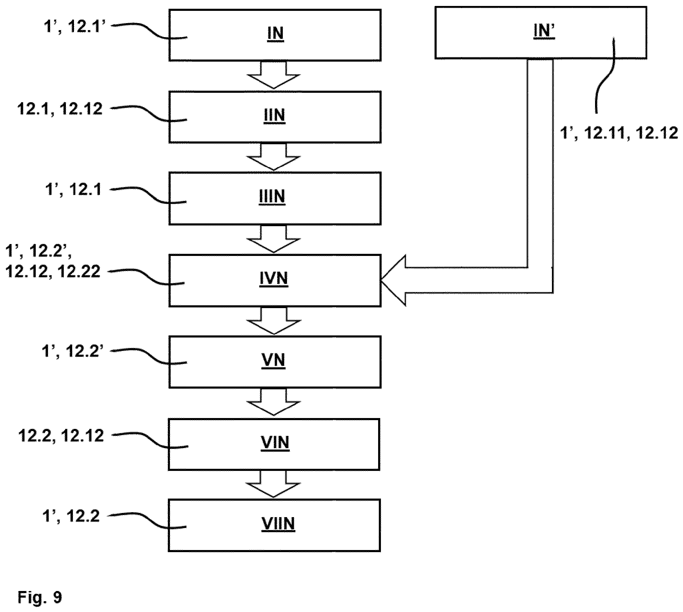

Fig. 9 zeigt schematisch eine Abfolge von Schritten IN, IN' bis VIIN des Verfahrens zur Nachrüstung einer bestehenden Simulationseinrichtung 1'. Die bestehende Simulationseinrichtung 1' weist einen bestehenden Drehwinkelaufnehmer 12.2' und eine bestehende Messscheibe 12.1' ohne eine Nullmarke 12.12 auf.

In einem ersten Schritt IN des Verfahrens wird die bestehende Messscheibe 12.1' ausgebaut. In einem zweiten Schritt IIN des Verfahrens wird eine Messscheibe 12.1 mit einer Nullmarke 12.12 bereitgestellt. In einem dritten Schritt IIIN des Verfahrens wird die bereitgestellte Messscheibe 12.1 anstelle der bestehenden Messscheibe 12.1' eingebaut. In einem vierten Schritt IVN des Verfahrens wird eine Anordnung des bestehenden Drehwinkelaufnehmers 12.2' bezüglich der Nullmarke 12.12 als Nullwinkel 12.22 definiert. Der Austausch der bestehenden Messcheibe 12.1' nach den ersten Schritte IN bis IVN bieten sich an, wenn die Winkelmarken 12.11 nicht eineindeutige Inkrementalcodewerte sind und somit keiner der Inkrementalcodewerte als Nullmarke 12.12 definiert werden kann.

In einem alternativen ersten Schritt IN' des Verfahrens wird eine der Winkelmarken 12.11 der bestehenden Messscheibe 12.1' als Nullmarke 12.12 definiert. Daraufhin wird der vierte Schritt IVN des Verfahrens ausgeführt und eine Anordnung des bestehenden Drehwinkelaufnehmers 12.2' bezüglich der Nullmarke 12.12 als Nullwinkel 12.22 definiert. Der alternative erste Schritt IN' bietet sich an, wenn die Winkelmarken 12.11 Absolutcodewerte sind, so dass einer der Absolutcodewert eineindeutig als Nullmarke 12.12 definiert werden kann.

Falls der bestehende Drehwinkelaufnehmer 12.2' keine Nullmarke 12.12 messen kann, wird der bestehende Drehwinkelaufnehmer 12.2' in einem fünften Schritt VN des Verfahrens ausgebaut. In einem sechsten Schritt VIN des Verfahrens wird ein Drehwinkelaufnehmer 12.2 welcher die Nullmarke 12.12 messen kann bereitgestellt. Und in einem siebten Schritt VIIN des Verfahrens wird der bereitgestellte Drehwinkelaufnehmer 12.2 anstelle des bestehenden Drehwinkelaufnehmers 12.2' eingebaut. Der Austausch des bestehenden Drehwinkelaufnehmers 12.2' nach den Schritten VN bis VIIN bietet sich an, wenn der bestehende Drehwinkelaufnehmer 12.2' die Nullmarke 12.12 nicht messen kann, beispielsweise weil die Nullmarke 12.12 und die Winkelmarken 12.11 räumlich voneinander getrennt auf der Messoberfläche 12.10 angeordnet sind.

### Bezugszeichenliste

- 1: Simulationseinrichtung
- 1': bestehende Simulationseinrichtung
- 2: Drehschrauber
- 10: Bremseinheit
- 10.0: Bremseinheitgehäuse
- 10.1: Bremselement
- 10.2: Rotor
- 10.3: Steuer- und Regeleinheit
- 11: Kupplungselement
- 12: Messeinheit
- 12.0: Messeinheitgehäuse
- 12.1: Messscheibe
- 12.1': bestehende Messscheibe
- 12.10: Messoberfläche
- 12.11: Winkelmarke
- 12.12: Nullmarke
- 12.2: Drehwinkelaufnehmer
- 12.2': bestehender Drehwinkelaufnehmer
- 12.21: Sensorelement
- 12.22: Nullwinkel
- 12.3: Drehmomentaufnehmer
- 13: Prüfverbindungselement
- 14: Auswerteeinheit
- 14.1: Auswerteprogramm
- 14.2: Drehwinkelsignalleitung
- 14.3: Drehmomentsignalleitung
- Δ1, Δ2, Δ3: Abweichung
- IN - VIIN: Schritt des Verfahrens zur Nachrüstung einer bestehenden Simulationseinrichtung
- IS - VIIS: Schritt des Verfahrens zur Durchführung der Schraubfallsimulation
- M: Drehmoment
- Me1, Me2, Me3: maximales Drehmoment
- Mm: mittleres Drehmoment
- Ms1, Ms2, Ms3: Startdrehmomentsignal
- MS: Drehmomentsignal
- NS: Nullmarkensignal
- R1, R2, R3: Drehmomentrate
- W: Drehwinkel
- We1, We2, We3: maximaler Drehwinkel
- Ws1, Ws2, Ws3: Startdrehwinkelsignal
- Wm: mittlerer Drehwinkel
- Z: Drehachse

## Patentansprüche

1. Simulationseinrichtung (1) für die Schraubfallsimulation eines Drehschraubers (2); mit einem Prüfverbindungselement (13) und mit einer Bremseinheit (10), welches Prüfverbindungselement (13) starr mit der Bremseinheit (10) verbunden ist; welcher Drehschrauber (2) geeignet ist, mit dem Prüfverbindungselement (13) gekuppelt zu werden; welcher Drehschrauber (2) geeignet ist, im mit dem Prüfverbindungselement (13) gekuppelten Zustand aktiviert zu werden; welcher aktivierte Drehschrauber (2) im mit dem Prüfverbindungselement (13) gekuppelten Zustand ein Drehmoment auf das mit ihm gekuppelte Prüfverbindungselement (13) ausübt; welches ausgeübte Drehmoment das Prüfverbindungselement (13) um eine Drehachse (Z) dreht; welche Bremseinheit (10) aktivierbar ist; welche aktivierte Bremseinheit (10) das sich um die Drehachse (Z) drehende Prüfverbindungselement (13) bremst; mit einem Drehmomentaufnehmer (12.3) zur Messung des ausgeübten Drehmoments; und mit einem Drehwinkelaufnehmer (12.2) zur Messung eines Drehwinkels, um den sich das Prüfverbindungselement (13) um die Drehachse (Z) dreht; **dadurch gekennzeichnet, dass** die Simulationseinrichtung (1) eine Nullmarke (12.12) aufweist; dass die Bremseinheit (10) bezüglich der Nullmarke (12.12) in einen Nullwinkel (12.22) ausrichtbar ist; und dass im mit dem Prüfverbindungselement (13) gekuppelten Zustand des Drehschraubers (2), die Simulationseinrichtung (1) geeignet ist die Schraubfallsimulation aus dem bezüglich der Nullmarke (12.12) ausgerichteten Nullwinkel (12.22) heraus zu starten und sich die drehenden Teile der Simulationseinrichtung (1) immer in der gleichen definierten Ausgangslage der Drehbewegung befinden.

2. Simulationseinrichtung (1) nach Anspruch 1, **dadurch gekennzeichnet, dass** die Simulationseinrichtung (1) eine Messscheibe (12.1) aufweist; und dass die Messscheibe (12.1) eine Nullmarke (12.12) aufweist.

3. Simulationseinrichtung (1) nach Anspruch 2, **dadurch gekennzeichnet, dass** die Messscheibe (12.1) entlang der Drehachse (Z) zwischen der Bremseinheit (10) und dem Prüfverbindungselement (13) angeordnet ist; dass die Messscheibe (12.1) starr mit der Bremseinheit (10) verbunden ist; dass das Prüfverbindungselement (13) starr mit der Messscheibe (12.1) verbunden ist; und dass die Nullmarke (12.12) auf einer Messoberfläche (12.10) der Messcheibe (12.1) angeordnet ist.

4. Simulationseinrichtung (1) nach Anspruch 3, **dadurch gekennzeichnet, dass** die Messscheibe (12.1) Winkelmarken (12.11) aufweist; dass die Winkelmarken (12.11) auf der Messoberfläche (12.10) angeordnet sind; und dass die Nullmarke (12.12) und die Winkelmarken (12.11) räumlich voneinander getrennt auf der Messoberfläche (12.10) angeordnet sind.

5. Simulationseinrichtung (1) nach einem der Ansprüche 3 oder 4, **dadurch gekennzeichnet, dass** die Winkelmarken (12.11) Inkrementalcodewerte sind.

6. Simulationseinrichtung (1) nach Anspruch 3, **dadurch gekennzeichnet, dass** die Messscheibe (12.1) Winkelmarken (12.11) aufweist; dass die Winkelmarken (12.11) ein Gray-Code sind; dass der Gray-Code weitgehend auf der gesamten Messoberfläche (12.10) angeordnet ist; dass der Gray-Code eine Vielzahl von hellen und dunklen Codewerten aufweist; und dass die hellen und dunklen Codewerte in Drehrichtung gesehen, nebeneinander angeordnet sind.

7. Simulationseinrichtung (1) nach einem der Ansprüche 3 oder 6, **dadurch gekennzeichnet, dass** die Winkelmarken (12.11) Absolutcodewerte sind.

8. Simulationseinrichtung (1) nach einem der Ansprüche 1 bis 7, **dadurch gekennzeichnet, dass** der Drehwinkelaufnehmer (12.2) bezüglich der Nullmarke (12.12) in einem Nullwinkel (12.22) definiert angeordnet ist.

9. Simulationseinrichtung (1) nach einem der Ansprüche 1 bis 8, **dadurch gekennzeichnet, dass** der Drehwinkelaufnehmer (12.2) ortsfest an der Simulationseinrichtung (1) angebracht ist.

10. Simulationseinrichtung (1) nach einem der Ansprüche 1 bis 9, **dadurch gekennzeichnet, dass** der Drehwinkelaufnehmer (12.2) ein Sensorelement (12.21) aufweist; dass das Sensorelement (12.21) die im Nullwinkel (12.22) ausgerichtete Nullmarke (12.12) erfasst; und dass der Drehwinkelaufnehmer (12.2) für eine vom Sensorelement (12.21) erfasste Nullmarke (12.12) ein Nullmarkensignal (NS) erzeugt.

11. Verfahren zur Durchführung der Schraubfallsimulation eines Drehschraubers (2) unter Verwendung der Simulationseinrichtung (1) nach einem der Ansprüche 1 bis 10; **dadurch gekennzeichnet, dass** in einem ersten Schritt (IS) des Verfahrens die Bremseinheit (10) bezüglich der Nullmarke (12.12) in einen Nullwinkel (12.22) ausgerichtet wird; dass in einem zweiten Schritt (IIS) des Verfahrens der Drehschrauber (2) mit dem Prüfverbindungselement (13) gekuppelt wird; und dass in einem dritten Schritt (IIIS) des Verfahrens die Schraubfallsimulation aus dem Nullwinkel (12.22) heraus gestartet wird.

12. Verfahren zur Nachrüstung einer bestehenden Simulationseinrichtung (1') für die Schraubfallsimulation eines Drehschraubers (2) zur Bildung der Simulationseinrichtung (1) nach einem der Ansprüche 1 bis 10, welche bestehende Simulationseinrichtung (1') einen bestehenden Drehwinkelaufnehmer (12.2') und eine bestehende Messscheibe (12.1') ohne eine Nullmarke (12.12) aufweist; **dadurch gekennzeichnet, dass** in einem ersten Schritt (IN) des Verfahrens die bestehende Messscheibe (12.1') ausgebaut wird; dass in einem zweiten Schritt (IIN) des Verfahrens eine Messscheibe (12.1) mit einer Nullmarke (12.12) bereitgestellt wird; dass in einem dritten Schritt (IIIN) des Verfahrens die bereitgestellte Messscheibe (12.1) anstelle der bestehenden Messscheibe (12.1') eingebaut wird; und dass in einem vierten Schritt (IVN) des Verfahrens eine Anordnung des bestehenden Drehwinkelaufnehmers (12.2') bezüglich der Nullmarke (12.12) als Nullwinkel (12.22) definiert wird.

13. Verfahren nach Anspruch 12; **dadurch gekennzeichnet, dass** der bestehende Drehwinkelaufnehmer (12.2') nicht geeignet ist, die Nullmarke (12.12) der eingebauten Messscheibe (12.1) zu messen und in einem fünften Schritt (VN) des Verfahrens ausgebaut wird; dass in einem sechsten Schritt (VIN) des Verfahrens ein Drehwinkelaufnehmer (12.2) welcher die Nullmarke (12.12) der eingebauten Messscheibe (12.1) messen kann bereitgestellt wird; und dass in einem siebten Schritt (VIIN) des Verfahrens der bereitgestellte Drehwinkelaufnehmer (12.2) anstelle des bestehenden Drehwinkelaufnehmers (12.2') eingebaut wird.

14. Verfahren zur Nachrüstung einer bestehenden Simulationseinrichtung (1') für die Schraubfallsimulation eines Drehschraubers (2) zur Bildung der Simulationseinrichtung (1) nach einem der Ansprüche 1 bis 10, welche bestehende Simulationseinrichtung (1') einen bestehenden Drehwinkelaufnehmer (12.2') und eine bestehende Messscheibe (12.1') mit Winkelmarken (12.11), aber ohne eine Nullmarke (12.12) aufweist; **dadurch gekennzeichnet, dass** in einem ersten Schritt (IN') des Verfahrens eine der Winkelmarken (12.11) der bestehenden Messscheibe (12.1') als Nullmarke (12.12) definiert wird; und dass in einem auf den ersten Schritt folgenden Schritt (IVN) des Verfahrens eine Anordnung des bestehenden Drehwinkelaufnehmers (12.2') bezüglich der Nullmarke (12.12) als Nullwinkel (12.22) definiert wird.

## Claims

1. A simulation device (1) for the screw joint simulation of a nutrunner (2); comprising a test connecting element (13) and comprising a brake unit (10), said test connecting element (13) being rigidly connected to said brake unit (10); which nutrunner (2) is configured for coupling with said test connecting element (13); which nutrunner (2) is configured for activation when coupled with said test connecting element (13); wherein said activated nutrunner (2) when coupled with said test connecting element (13) exerts a torque onto the test connecting element (13) coupled thereto; said exerted torque rotating the test connecting element (13) about an axis of rotation (Z); which brake unit (10) can be activated; wherein said activated brake unit (10) brakes the test connecting element (13) rotating about the axis of rotation (Z); comprising a torque transducer (12.3) for measuring the exerted torque; and comprising an rotational angle transducer (12.2) for measuring an angle of rotation about which the test connecting element (13) rotates about the axis of rotation (Z); **characterized in that** the simulation device (1) comprises a zero mark (12.12); and **in that** the brake unit (10) can be orientated at a zero angle (12.22) with respect to said zero mark (12.12); und **in that** when said nutrunner (2) is coupled with said test connecting element (13), the simulation device (1) is configured for starting the screw joint simulation from said zero angle (12.22) aligned with respect to said zero mark (12.12) and the rotating parts of the simulation device (1) are always in the same defined starting position of the rotational movement.

2. The simulation device (1) according to claim 1, **characterized in that** said simulation device (1) comprises a measuring disc (12.1); and **in that** said measuring disc (12.1) comprises a zero mark (12.12).

3. The simulation device (1) according to claim 2, **characterized in that** said measuring disc (12.1) is arranged between brake unit (10) and test connecting element (13) in the direction of the axis of rotation (Z); **in that** said measuring disc (12.1) is rigidly connected to the brake unit (10); **in that** the test connecting element (13) is rigidly connected to said measuring disc (12.1); and **in that** the zero mark (12.12) is arranged on a measuring surface (12.10) of the measuring disc (12.1).

4. The simulation device (1) according to claim 3, **characterized in that** said measuring disc (12.1) comprises angle marks (12.11); **in that** said angle marks (12.11) are arranged on the measuring surface (12.10); and **in that** the zero mark (12.12) and the angle marks (12.11) are arranged spatially separated from each other on the measuring surface (12.10).

5. The simulation device (1) according to any of the claims 3 or 4, **characterized in that** the angle marks (12.11) are incremental code values.

6. The simulation device (1) according to claim 3, **characterized in that** the measuring disc (12.1) comprises angle marks (12.11); **in that** said angle marks (12.11) are a Gray code; **in that** said Gray code is arranged on largely the entire measuring surface (12.10); **in that** said Gray code comprises a plurality of light and dark code values; and **in that** seen in the direction of rotation, said light and dark code values are arranged side by side to each other.

7. The simulation device (1) according to any of the claims 3 or 6, **characterized in that** the angle marks (12.11) are absolute code values.

8. The simulation device (1) according to any of the claims 1 to 7, **characterized in that** the rotational angle transducer (12.2) is arranged in a defined manner at a zero angle (12.22) with respect to the zero mark (12.12).

9. The simulation device (1) according to any of the claims 1 to 8, **characterized in that** the rotational angle transducer (12.2) is mounted in a fixed position on the simulation device (1).

10. The simulation device (1) according to any of the claims 1 to 9, **characterized in that** the rotational angle transducer (12.2) comprises a sensor element (12.21); **in that** said sensor element (12.21) detects the zero mark (12.12) adjusted to the zero angle (12.22); and **in that** the rotational angle transducer (12.2) generates a zero mark signal (NS) for a zero mark (12.12) detected by said sensor element (12.21).

11. A method for carrying out the screw joint simulation of a nutrunner (2) using the simulation device (1) according to any of the claims 1 to 10; **characterized in that,** in a first step (IS) of the method, the brake unit (10) is adjusted to a zero angle (12.22) with respect to the zero mark (12.12); **in that**, in a second step (IIS) of the method, the nutrunner (2) is coupled with the test connecting element (13); and **in that**, in a third step (IIIS) of the method, the screw joint simulation is initiated starting from the zero angle (12.22).

12. A method for retrofitting a preexisting simulation device (1') for the screw joint simulation of a nutrunner (2) to form the simulation device (1) according to any of the claims 1 to 10, wherein said preexisting simulation device (1') comprises a preexisting rotational angle transducer (12.2') and a preexisting measuring disc (12.1') without zero mark (12.12); **characterized in that,** in a first step (IN) of the method, the preexisting measuring disc (12. 1') is removed; **in that**, in a second step (IIN) of the method, a measuring disc (12.1) having a zero mark (12.12) is provided; **in that**, in a third step (IIIN) of the method, the measuring disc (12.1) provided is installed in place of the preexisting measuring disc (12.1'); and **in that**, in a fourth step (IVN) of the method, an orientation of the preexisting rotational angle transducer (12.2') with respect to the zero mark (12.12) is defined as the zero angle (12.22).

13. The method according to claim 12; **characterized in that** the preexisting rotational angle transducer (12.2') is not configured for measuring the zero mark (12.12) of the installed measuring disk (12.1) and is removed in a fifth step (VN) of the method; **in that**, in a sixth step (VIN) of the method, a rotational angle transducer (12. 2) designed for measuring the zero mark (12.12) of the installed measuring disk (12.1) is provided; and that, in a seventh step (VIIN) of the method, the rotational angle transducer (12.2) provided is installed in place of the preexisting rotational angle transducer (12.2').

14. A method for retrofitting a preexisting simulation device (1') for the screw joint simulation of a nutrunner (2) to form the simulation device (1) according to any of the claims 1 to 10, wherein said preexisting simulation device (1') comprises a preexisting rotational angle transducer (12.2') and a preexisting measuring disc (12.1') with angle marks (12.11) but without zero mark (12. 12); **characterized in that,** in a first step (IN') of the method, one of the angle marks (12.11) of the preexisting measuring disc (12.1') is defined as the zero mark (12.12); and **in that**, in a fourth step (IVN) following the first step of the method, an orientation of the preexisting rotational angle transducer (12.2') with respect to the zero mark (12.12) is defined as the zero angle (12.22).

## Revendications

1. Dispositif de simulation (1) pour la simulation du cas de vissage pour un outil de vissage (2) ; comprenant un élément de raccordement d'essai (13) et comprenant une unité de freinage (10), ledit élément de raccordement d'essai (13) étant accouplé de façon rigide à ladite unité de freinage (10) ; lequel outil de vissage (2) est adapté pour être couplé à l'élément de raccordement d'essai (13) ; lequel outil de vissage (2) couplé à l'élément de raccordement d'essai (13) est adapté pour être activé; dans lequel ledit outil de vissage (2) couplé à l'élément de raccordement d'essai (13) et activé exerce un couple sur l'élément de raccordement d'essai (13) qui lui est couplé ; ledit couple exercé faisant tourner l'élément de raccordement d'essai (13) autour d'un axe de rotation (Z) ; laquelle unité de freinage (10) est adaptée pour être activée ; laquelle unité de freinage (10) activée freine l'élément de raccordement d'essai (13) tournant autour de l'axe de rotation (Z) ; comprenant un capteur de couple (12.3) pour mesurer le couple exercé ; et comprenant un capteur de l'angle de rotation (12.2) pour mesurer un angle de rotation avec lequel l'élément de raccordement d'essai (13) tourne autour de l'axe de rotation (Z) ; **caractérisé en ce que** ledit dispositif de simulation (1) comprend un repère zéro (12.12) ; **en ce que** l'unité de freinage (10) est adaptée pour être alignée à un angle zéro (12.22) par rapport audit repère zéro (12.12) ; et **en ce que**, lorsque l'outil de vissage (2) est couplé à l'élément de raccordement d'essai (13), ledit dispositif de simulation (1) est adapté pour démarrer la simulation du cas de vissage à partir dudit angle zéro (12.22) aligné par rapport audit repère zéro (12.12) et des parties rotatives dudit dispositif de simulation (1) se trouvent souvent dans la même position de départ définie du mouvement de rotation.

2. Dispositif de simulation (1) selon la revendication 1, **caractérisé en ce que** ledit dispositif de simulation (1) comprend un disque de mesure (12.1) ; et **en ce que** ledit disque de mesure (12.1) comprend un repère zéro (12.12).

3. Dispositif de simulation (1) selon la revendication 2, **caractérisé en ce que** ledit disque de mesure (12.1) est disposé entre l'unité de freinage (10) et l'élément de raccordement d'essai (13) dans la direction de l'axe de rotation (Z) ; **en ce que** ledit disque de mesure (12.1) est accouplé de façon rigide à l'unité de freinage (10) ; **en ce que** l'élément de raccordement d'essai (13) est accouplé de façon rigide audit disque de mesure (12.1) ; et **en ce que** le repère zéro (12.12) est disposé sur une surface de mesure (12.10) du disque de mesure (12.1).

4. Dispositif de simulation (1) selon la revendication 3, **caractérisé en ce que** ledit disque de mesure (12.1) comprend des repères angulaires (12.11) ; **en ce que** lesdits repères angulaires (12.11) sont disposés sur la surface de mesure (12.10) ; et **en ce que** le repère zéro (12.12) et les repères angulaires (12.11) sont disposés de manière espacée les uns des autres sur la surface de mesure (12.10).

5. Dispositif de simulation (1) selon l'une quelconque des revendications 3 ou 4, **caractérisé en ce que** les repères angulaires (12.11) sont des valeurs de code incrémentales.

6. Dispositif de simulation (1) selon la revendication 3, **caractérisé en ce que** le disque de mesure (12.1) comprend des repères angulaires (12.11) ; **en ce que** lesdits repères angulaires (12.11) sont un code Gray ; **en ce que** ledit code Gray est essentiellement disposé sur toute la surface de mesure (12.10) ; **en ce que** ledit code Gray comprend une pluralité de valeurs de code claires et foncées ; et **en ce que** lesdites valeurs de code claires et foncées sont disposées l'une à côté de l'autre dans le sens de rotation.

7. Dispositif de simulation (1) selon l'une quelconque des revendications 3 ou 6, **caractérisé en ce que** les repères angulaires (12.11) sont des valeurs de code absolues.

8. Dispositif de simulation (1) selon l'une quelconque des revendications 1 à 7, **caractérisé en ce que** le capteur de l'angle de rotation (12.2) est disposé de manière définie à un angle zéro (12.22) par rapport au repère zéro (12.12).

9. Dispositif de simulation (1) selon l'une quelconque des revendications 1 à 8, **caractérisé en ce que** le capteur de l'angle de rotation (12.2) est monté de manière fixe au dispositif de simulation (1).

10. Dispositif de simulation (1) selon l'une quelconque des revendications 1 à 9, **caractérisé en ce que** le capteur de l'angle de rotation (12.2) comprend un élément capteur (12.21) ; **en ce que** ledit élément capteur (12.21) détecte le repère zéro (12.12) aligné à l'angle zéro (12.22) ; et **en ce que** le capteur de l'angle de rotation (12.2) génère un signal de repère zéro (NS) pour un repère zéro (12.12) détecté par ledit élément capteur (12.21) .

11. Procédé de mise en œuvre la simulation du cas de vissage d'un outil de vissage (2) en utilisant le dispositif de simulation (1) selon l'une quelconque des revendications 1 à 10, **caractérisé en ce que,** dans une première étape (IS) du procédé, l'unité de freinage (10) est alignée à un angle zéro (12.22) par rapport au repère zéro (12.12) ; **en ce que**, dans une deuxième étape (IIS) du procédé, l'outil de vissage (2) est couplé à l'élément de raccordement d'essai (13) ; et **en ce que**, dans une troisième étape (IIIS) du procédé, la simulation du cas de vissage est démarrée à partir de l'angle zéro (12.22).

12. Procédé de modernisation d'un dispositif de simulation préexistant (1') pour la simulation du cas de vissage d'un outil de vissage (2) pour obtenir le dispositif de simulation (1) selon l'une quelconque des revendications 1 à 10, dans lequel ledit dispositif de simulation préexistant (1') comprend un capteur de l'angle de rotation préexistant (12.2') et un disque de mesure préexistant (12.1') sans repère zéro (12.12) ; **caractérisé en ce que,** dans une première étape (IN) du procédé, le disque de mesure préexistant (12. 1') est retiré ; **en ce que**, dans une deuxième étape (IIN) du procédé, un disque de mesure (12.1) comportant un repère zéro (12.12) est fourni ; **en ce que**, dans une troisième étape (IIIN) du procédé, le disque de mesure (12.1) fourni est installé à la place du disque de mesure préexistant (12.1') ; et **en ce que**, dans une quatrième étape (IVN) du procédé, un arrangement du capteur de l'angle de rotation préexistant (12.2') par rapport au repère zéro (12.12) est définie comme l'angle zéro (12.22).

13. Procédé selon la revendication 12, **caractérisé en ce que** le capteur de l'angle de rotation préexistant (12.2') n'est pas conçu pour mesurer le repère zéro (12.12) du disque de mesure (12.1) installé et est retiré lors d'une cinquième étape (VN) du procédé ; **en ce que**, lors d'une sixième étape (VIN) du procédé, un capteur de l'angle de rotation (12.2) adapté pour mesurer le repère zéro (12.12) du disque de mesure (12.1) installé est fourni; et **en ce que**, dans une septième étape (VIIN) du procédé, ledit capteur de l'angle de rotation (12.2) fourni est installé à la place du capteur de l'angle de rotation préexistant (12.2').

14. Procédé de modernisation d'un dispositif de simulation préexistant (1') pour la simulation du cas de vissage d'un outil de vissage (2) pour obtenir le dispositif de simulation (1) selon l'une quelconque des revendications 1 à 10, dans lequel ledit dispositif de simulation préexistant (1') comprend un capteur de l'angle de rotation préexistant (12.2') et un disque de mesure préexistant (12.1') avec des repères angulaires (12.11) mais sans repère zéro (12.12) ; **caractérisé en ce que,** dans une première étape (IN') du procédé, l'un des repères angulaires (12.11) du disque de mesure préexistant (12.1') est défini comme repère zéro (12.12) ; et **en ce que**, dans une étape (IVN) suite à la première étape du procédé, un arrangement par rapport au repère zéro (12.12) du capteur de l'angle de rotation préexistant (12.2') est définie comme l'angle zéro (12.22).
